# EUROPEAN PATENT SPECIFICATION

(11) **EP 3 909 828 B1**
(45) Date of publication and mention of the grant of the patent: **11.06.2025**
(21) Application number: 19908455.9
(22) Date of filing: 03.12.2019
(51) Int. Cl.: B61F 5/50, G01P 3/481, B61F 15/28

(54) **LOW-FLOOR VEHICLE, BOGIE AND SHAFT END STRUCTURE THEREOF.**
NIEDERFLURFAHRZEUG, DREHGESTELL UND WELLENENDKONSTRUKTION DAFÜR.
VÉHICULE À PLANCHER SURBAISSÉ, BOGIE ET STRUCTURE D'EXTRÉMITÉ D'ARBRE ASSOCIÉS.

(30) Priority: 10.01.2019 CN 201910023564; 16.01.2019 CN 201910040119
(43) Date of publication of application: 17.11.2021
(73) Proprietor: CRRC QINGDAO SIFANG CO., LTD., Chengyang District Qingdao Shandong 266111 (CN)
(72) Inventor: LIU, Yang, Qingdao, Shandong 266111 (CN); ZHANG, Yuejun, Qingdao, Shandong 266111 (CN); ZHANG, Huijie, Qingdao, Shandong 266111 (CN); LIU, Wei, Qingdao, Shandong 266111 (CN); ZHOU, Xiaojiang, Qingdao, Shandong 266111 (CN)
(74) Representative: Prinz & Partner mbB
(86) International application number: PCT/CN2019/122626
(87) International publication number: WO 2020/143363

(56) References cited:
- WO-A1-01/45990
- WO-A1-2018/059937
- CN-A- 104 290 770
- CN-A- 108 045 391
- CN-A- 108 058 716
- CN-A- 109 703 589
- CN-A- 109 733 433
- CN-U- 208 239 472
- CN-Y- 2 255 046
- DE-A1- 10 211 173
- JP-A- 2004 354 231
- JP-A- S6 382 870
- US-A- 5 589 767
- US-A1- 2002 189 490

## Description

The present application claims the priorities to the following two Chinese patent applications, Chinese Patent Application No. 201910023564.X, titled "LOW-FLOOR VEHICLE, BOGIE AND SHAFT END STRUCTURE", filed with the China National Intellectual Property Administration on January 10, 2019; and Chinese Patent Application No. 201910040119.4, titled "LOW-FLOOR VEHICLE, BOGIE AND SHAFT END SEALING STRUCTURE", filed with the China National Intellectual Property Administration on January 16, 2019.

### FIELD

The present application relates to the technical field of rail transit, and in particular to a low-floor vehicle, a bogie and a shaft end structure thereof.

### BACKGROUND

As we all know, a low-floor vehicle is widely favored for its simple structure and strong adaptability to the environment. However, the layout of the shaft end speed sensor and grounding device is difficult to design in the design process of the low-floor vehicle, since the shaft end structure is compact, the space is narrow, and there are relatively more functional requirements. The solution in the prior art is to arrange different multiple sensors on different bogie shaft ends. Due to the limitation of its own structure, this solution adds the complexity of the entire bogie and the difficulty of vehicle wiring.

In addition, in the actual operation process, the bogie shaft end bearing is very prone to the problem of poor lubrication, which is caused by the mixing of foreign dust, water and other impurities into the grease.

The document US 2002/189490 A1 discloses an idler wheel arrangement for rail vehicles, consisting of a wheel rotably mounted on an axle stub on an axle, and having an inside facing the axle and an opposite outside and of holding an earth-contact arrangement, a transmitter arrangement of an anti-slip device and a braking device. The holding means having a carrier element fixedly connected on the end face to the axle stub on the outside of the wheel. The carrier element has reception means for fixed components of all three functional devices, the wheel being assigned reception means for correspondingly associated components, rotating with the wheel, of the three functional devices, in adaptation to the arrangement of the fixed components.

In view of this, it is urgent to find another way to optimize the design of the bogie shaft end of the low-floor vehicle, so as to overcome the above defects in the prior art.

### SUMMARY

To solve the above technical problems, the present application provides a low-floor vehicle, bogie and shaft end structure thereof. The shaft end structure is optimized for speed measurement and grounding functions, which makes full use of the shaft end assembly space, and greatly reduces the wiring difficulty and bogie complexity.

The bogie shaft end structure provided by the present application includes a speed measuring gear and a friction disc, and the speed measuring gear, which has a central through hole, is used for fixedly connecting to an end face of a vehicle wheel, and an outer end face of the speed measuring gear is provided thereon with multiple speed measuring teeth that are evenly distributed in the circumferential direction; the friction disc is fixedly connected to the speed measuring gear, and is specifically arranged on the outer end face, outside the speed measuring teeth in a radial direction, of the speed measuring gear; a shaft end front cover is mounted on an outer side of the speed measuring gear and the friction disc, and a central part of the main body of the shaft end front cover is used for passing through the central through hole of the speed measuring gear and fixedly connecting to a shaft end of an axle; and the shaft end front cover is provided thereon with a speed sensor interface and a brush interface that are arranged corresponding to the speed measuring teeth and the friction disc respectively. The speed measuring gear has a concave annular groove, and a speed measuring teeth body, which is axially extended, is arranged at an inner side of the annular groove and the speed measuring teeth body has an annular outer end surface provided with the speed measuring teeth; the friction disc abuts against and is fixed with the speed measuring gear outside the annular groove, and is provided with a limiting part extending axially from an inner edge of a main body of the shaft end front cover, and the limiting part is inserted into the annular groove to establish radial positioning of the limiting part and the annular groove .

Preferably, a middle part of the shaft end front cover has a middle ring body which is axially extended, and the middle ring body is inserted between the inner hole of the friction disc and the outer peripheral surface of the speed measuring teeth body; and a third dynamic sealing pair is arranged between the outer peripheral surface of the middle ring body and the inner hole of the friction disc and/or between the inner hole of the middle ring body and the outer peripheral surface of the speed measuring teeth body.

Preferably, a third sealing element mounting groove is arranged on the outer peripheral surface of the speed measuring teeth body, and the third sealing element is arranged in the third sealing element mounting groove to form a third dynamic sealing pair between the inner hole of the middle ring body and the outer peripheral surface of the speed measuring teeth body.

Preferably, the middle ring body is arranged such that when the shaft end front cover is fixedly connected to the shaft end of the axle, the middle ring body is axially pressed against the groove bottom of the annular groove.

Preferably, the speed measuring gear has a convex ring axially extending from its body for pressing against the bearing outer ring between the wheel and the axle.

Preferably, the friction disc and the speed measuring gear are fixedly connected by multiple threaded fasteners evenly distributed in the circumferential direction.

The present application further provides a bogie includes an axle and a wheel which are matched, and further includes the bogie shaft end structure as mentioned above; a speed sensor and a grounding device are fixedly arranged on the shaft end front cover, and the signal processing end of the speed sensor is inserted into a speed sensor interface to obtain the wheel rotation speed; a brush of the grounding device extends through the brush interface to fit with the friction disc, so as to realize grounding and conduction.

Preferably, the central part of the main body of the shaft end front cover is inserted through the central through hole of the speed measuring gear, and is fixedly connected with the shaft end of the axle by using multiple threaded fasteners.

A low-floor vehicle is further provided according to the present application, which includes the bogie as mentioned before.

In view of the limited space at the shaft end of low-floor vehicles, the present application innovatively integrates the grounding function and the speed measuring function at the shaft end of the bogie. Specifically, on the outer end face of the speed measuring gear fixedly connected with the wheel, multiple speed measuring teeth evenly distributed in the circumferential direction are arranged for adapting with the speed sensor to monitor the wheel rotation speed; on the outer end surface of the speed measuring gear on the radial outer side of the speed measuring teeth, a friction disc for matching with the brush of the grounding device is fixedly arranged to realize grounding conduction; meanwhile, the shaft end front cover, which covers the outer side of the speed measuring gear and the friction disc, is fixedly connected with the shaft end of the axle through the central through hole of the speed measuring gear, and is provided with the speed sensor interface and the brush interface which are respectively arranged corresponding to the speed measuring gear and the friction disc. With this arrangement, the speed measuring teeth is provided at the radial inner side of the bogie shaft end, and the radial outer side is the friction disc is provided at the radial outer side of the bogie shaft end, which are combined into a whole, and makes full use of the limited space of the shaft end to realize the above two basic functions. Compared with the prior art, the present application has the following beneficial effects.

Firstly, the present application makes full use of the shaft end space to integrate the grounding function and the speed measuring function into one bogie shaft end, which has the characteristics of simple and reliable structure, thereby reducing the complexity of bogie design and providing technical support for effectively reducing the manufacturing cost of the whole vehicle; At the same time, the grounding function and speed measuring function are integrated in one bogie shaft end, which further reduces the wiring difficulty.

Secondly, in the present application, a concave annular groove is arranged on the speed measuring gear, the speed measuring gear and the friction disc are respectively located at the inner and outer sides of the annular groove along the radial direction, and the friction disc has a limiting part extending axially from the inner edge of the main body of the shaft end front cover, and the limiting part may be inserted into the annular groove. On one hand, the radial positioning between the friction disc and the speed measuring gear is established, which may form the assembly preset position before the two are assembled and fixed, and ensure the assembly accuracy; On the other hand, the assembly presetting function is integrated into the speed measuring gear body, which further improves the compactness of the whole structure. On the basis of not occupying more space, the assembly accuracy is ensured.

Thirdly, the speed measuring gear further extends axially from its body to form a convex ring for pressing against the bearing outer ring between the wheel and the axle; That is to say, on the basis of reliably realizing the functions of grounding and speed measurement, the shaft end structure of this solution has the function of bearing positioning between conventional wheels and axles, thus further optimizing the space utilization of the shaft end.

In addition, the present application further provides a low-floor vehicle, a bogie and a shaft end structure thereof, and the shaft end structure optimizes the structure of the bogie shaft end with the functions of speed measurement and grounding, thereby completely avoiding the problem that the lubrication performance of the bogie shaft end bearing is influenced by external factors.

The bogie shaft end sealing structure provided by the present application includes the speed measuring gear, the friction disc and the shaft end front cover, and the outer end face of the speed measuring gear fixedly connect to the end face of the wheel is provided thereon with several speed measuring teeth that are evenly distributed in the circumferential direction; the friction disc is fixedly connected to the speed measuring gear, and is arranged on the outer end face of the speed measuring gear on the radial outer periphery of the speed measuring teeth; the shaft end front cover is mounted on the outer side of the speed measuring gear and the friction disc, the shaft end front cover has an outer ring body extending axially from the outer edge of the body to the outer edge of the wheel, and the central part of the body of the shaft end front cover is used for passing through the central through hole of the speed measuring gear and fixedly connect to a shaft end of the axle; and the shaft end front cover is provided thereon with the speed sensor interface and the brush interface that are arranged corresponding to the speed measuring teeth and the friction disc respectively; a static sealing pair is arranged between the wheel end face and the speed measuring gear, and a first dynamic sealing pair is arranged between the outer peripheral surface of the speed measuring gear and the outer ring body of the shaft end front cover.

Preferably, a second dynamic sealing pair is arranged between the central part of the shaft end front cover and the central through hole of the speed measuring gear.

Preferably, the middle part of the shaft end front cover has a middle ring body which is axially extended, and the middle ring body is inserted between the inner hole of the friction disc and the outer peripheral surface of the speed measuring teeth body; and a third dynamic sealing pair is arranged between the outer peripheral surface of the middle ring body and the inner hole of the friction disc and/or between the inner hole of the middle ring body and the outer peripheral surface of the speed measuring teeth body.

Preferably, sealant is coated between the wheel end face and the speed measuring gear to form the static sealing pair.

Preferably, the outer peripheral surface of the speed measuring gear or the outer ring body of the shaft end front cover is provided with a first sealing element mounting groove, and the first sealing element is arranged in the first seal mounting groove to form the first dynamic sealing pair.

Preferably, the central part of the shaft end front cover or the through hole at the middle part of the speed measuring gear is provided with a second sealing element mounting groove, and the second sealing element is arranged in the second sealing element mounting groove to form the second dynamic sealing pair.

Preferably, a third sealing element mounting groove is arranged on the outer peripheral surface of the speed measuring teeth body, and the third sealing element is arranged in the third sealing element mounting groove to form a third dynamic sealing pair between the inner hole of the middle ring body and the outer peripheral surface of the speed measuring teeth body.

Preferably, a carbon powder accommodating cavity is arranged between the friction disc and the shaft end front cover, and a powder discharging hole communicated with the carbon powder accommodating cavity is arranged at the bottom of the shaft end front cover, and the powder discharging hole is tightened by a screw plug.

In view of the limited space at the shaft end of low-floor vehicles, the present application integrates the grounding function and the speed measuring function at the shaft end of a bogie, and innovatively provides a shaft end sealing structure. Specifically, the static sealing pair is arranged between the wheel end face and the speed measuring gear, and a first dynamic sealing pair is arranged between the outer peripheral surface of the speed measuring gear and the outer ring body of the shaft end front cover. With this arrangement, sealing pairs are respectively arranged between the wheel and the speed measuring gear and between the speed measuring gear and the outer ring body of the shaft end front cover, which has the characteristics of simple structure and reliable sealing, and may completely avoid external pollutants and moisture from entering the interior even when operating in a severe environment, thus ensuring that the shaft end bearing of the bogie always keeps good lubrication performance.

In a further preferred solution of the present application, a carbon powder accommodating cavity is arranged between the friction disc and the shaft end front cover, thereby providing a storage space for carbon powder generated by friction between the brush and the friction disc during the running process of the vehicle, and the arrangement of the carbon powder storage space effectively reduces the overhaul and maintenance frequency of removing carbon powder and provides technical support for reducing the running cost of the vehicle; In addition, the bottom of the shaft end front cover is provided with a powder discharging hole communicated with the carbon powder accommodating cavity, and the screw plug is adopted to be screwed and matched with the powder discharging hole, that is to say, when the vehicle is used in daily use, it is tightened by the screw plug, and after a period of use, the carbon powder may be cleaned conveniently only by unscrewing the screw plug, which has good operability.

### BRIEF DESCRIPTION OF THE DRAWINGS

FIG. 1 is a schematic diagram of the overall structure of the bogie shaft end structure in the specific embodiment;
FIG. 2 is a partial schematic diagram of the bogie shaft end sealing structure shown in FIG. 1.

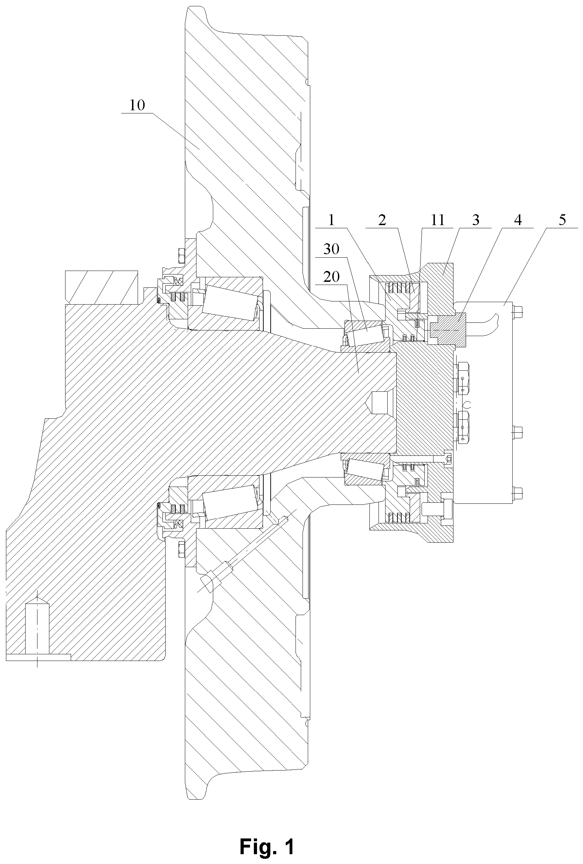

In the FIGS. 1 to 2:

| | |
|---|---|
| wheel 10, | axle 20, |
| bearing 30, | speed measuring gear 1, |
| central through hole 11, | speed measuring teeth body 12, |
| speed measuring teeth 121, | annular groove 13, |
| convex ring 14, | third sealing element mounting groove 15, |
| first sealing element mounting groove 16, | second sealing element mounting groove 17, |
| friction disc 2, | limiting part 21, |
| shaft end front cover 3, | speed sensor interface 31, |
| middle ring body 33, | central part 34, |
| outer ring body 35, | carbon powder accommodating cavity 36, |
| powder discharging hole 37, | speed sensor 4, |
| grounding device 5, | third sealing element 6, |
| first sealing element 7, | second sealing element 8, |
| screw plug 9. | |

### DETAILED DESCRIPTION

In order to make those skilled in the art better understand the technical solutions of the present application, the technical solution will be described completely hereinafter in conjunction with the drawings and embodiments of the present application.

Without losing generality, this embodiment takes the bogie shaft end form shown in FIG. 1 as the description basis, and explains in detail the innovative improvement solution of the shaft end structure proposed in this application. It should be understood that the outline, shape and size proportional relationship of bogie axles and wheels shown in the drawings do not constitute the technical solution claimed in this application and constitute substantial restrictions.

Referring to FIG.1, FIG.1 is a schematic diagram of the overall structure of the bogie shaft end structure according to this embodiment.

It should be made clear that the assembly relationship between a wheel 10 and an axle 20 in this solution is the same as that in the prior art, and a bearing 30 is arranged between the wheel 10 and the axle 20 to realize the rotation of the wheel 10. Of course, in order to clearly express the core inventive point of this application, only one side of the shaft end is partially shown in FIG. 1.

As shown in FIG. 1, the bogie shaft end structure provided by this solution includes a speed measuring gear 1 and a friction disc 2 which are fixedly connected in combination, and a shaft end front cover 3 which covers the outer sides of the speed measuring gear 1 and the friction disc 2.

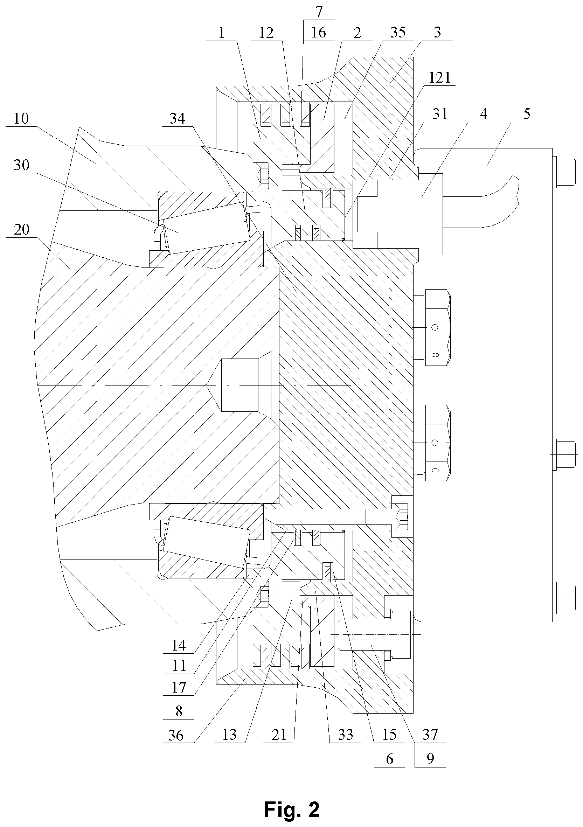

The speed measuring gear 1 is used for fixedly connecting with an end face of the wheel 10, and has a central through hole 11. Multiple speed measuring teeth 121 are circumferentially and evenly arranged on an outer end face of the speed measuring gear 1. The friction disc 2 is fixedly connected with the speed measuring gear 1, that is, the friction disc 2 and the speed measuring gear 1 are combined and fixedly connected into a whole; in spatial arrangement, the friction disc 2 is arranged on the outer end face, outside the speed measuring teeth 121 in a radial direction, of the speed measuring gear 1; that is to say, the speed measuring teeth 121 is arranged at the radial inner side of the bogie shaft end, and the friction disc 2 is arranged at the radial outer side, which makes full use of the limited space of the shaft end and optimally arranges the basic components having grounding and speed measuring functions. Referring to FIG. 2 together, FIG. 2 is a partial schematic diagram of the bogie shaft end sealing structure shown in FIG. 1.

The shaft end front cover 3 covers the outer side of the speed measuring gear 1 and the friction disc 2 to form an integral shaft end solution. The shaft end front cover 3 has an outer ring body 35 extending axially from the outer edge of its body to the outer edge of the wheel 10, and the central part of the body of the shaft end front cover 3 is used for fixedly connecting with the shaft end of the axle 20 through the central through hole 11 of the speed measuring gear 1. Accordingly, the shaft end front cover 3 is provided with a speed sensor interface 31 and a brush interface (not shown in the drawing based on the line shielding relation) respectively corresponding to the speed measuring teeth 121 and the friction disc 2. In this solution, the grounding function and the speed measuring function are integrated at the shaft end of the bogie, which is simple and reliable in structure. On one hand, it reduces the complexity of bogie design and, on the other hand, it reduces the wiring difficulty.

Specifically, a static sealing pair is arranged between an end face A of the wheel 10 and the speed measuring gear 1; preferably, a sealant is coated between the end face A and the speed measuring gear 1 to form the static sealing pair; there are many options for the sealant, for example but not limited to sealant 5699. Meanwhile, a first dynamic sealing pair is arranged between the outer peripheral surface of the speed measuring gear 1 and the outer ring body 35 of the shaft end front cover 3; sealing pairs are respectively arranged between the wheel 10 and the speed measuring gear 1 and between the speed measuring gear 1 and the outer ring body 35 of the shaft end front cover 3, which has the advantages of simple structure and reliable sealing.

As for the first dynamic sealing pair, as shown in the Figure, the outer peripheral surface of the speed measuring gear 1 is provided with a first sealing element mounting groove 16, and a first sealing element 7 is arranged in the first sealing element mounting groove 16 to form the first dynamic sealing pair. Herein, the matched first sealing element 7 and the first sealing element mounting groove 16 may be arranged and spaced apart in the axial direction according to the specific product requirements, for example, but not limited to three, as shown in the Figure, thereby forming a more reliable labyrinth sealing. Of course, it is also possible to adopt such a design that the first sealing element mounting groove (not shown in the Figure) is formed in the outer ring body 35 of the shaft end front cover 3, and the above-mentioned first dynamic sealing pair may also be established.

In order to avoid the loss of lubricating grease in the shaft end bearing, a second dynamic sealing pair may be further arranged between a central part 34 of the shaft end front cover 3 and a central through hole 11 of the speed measuring gear 1. As shown in the Figure, the central through hole 11 of the speed measuring gear 1 is provided with a second sealing element mounting groove 17, and the second sealing element 8 is arranged in the second sealing element mounting groove 17 to form the second dynamic sealing pair. Similarly, the matched second sealing element 8 and second sealing element mounting groove 17 may be arranged and spaced apart in the axial direction according to the specific product requirements, for example, but not limited to two, as shown in the Figure, so as to form a more reliable labyrinth seal. Of course, it is also possible to adopt such a design that the second sealing element sealing groove (not shown in the figure) is formed in the central part 34 of the shaft end front cover 3, and the above-mentioned second dynamic sealing pair may also be established.

With the running of the vehicle, carbon powder is formed by friction between the brush and friction disc during the running of the vehicle. In order to effectively reduce the frequency of maintenance, technical measures for storage and powder discharge may be further added. As shown in the Figure, a carbon powder accommodating cavity 36 is arranged between the friction disc and 2 the shaft end front cover 3, thereby providing a storage space for carbon powder formed by friction between the brush and the friction disc during the running process of the vehicle, and the arrangement of the carbon powder storage space effectively reduces the overhaul and maintenance frequency of removing carbon powder; in addition, the bottom of the shaft end front cover 3 is provided with a powder discharging hole 37 communicated with the carbon powder accommodating cavity 36, and a screw plug 9 is adopted to be screwed and matched with the powder discharging hole, and when the vehicle is in daily use, it is tightened by the screw plug 9. After a period of use, the carbon powder may be cleaned through the powder discharging hole 37 only by unscrewing the screw plug 9, which has good operability.

In order to make more effective use of the shaft end space, it may be further fully optimized in the preferred solution. As shown in FIG. 1, the outer end face of the speed measuring gear 1 is provided with a concave annular groove 13, and the speed measuring teeth 121 and the friction disc 2 are respectively located at the inner and outer sides of the annular groove 13 along the radial direction. Specifically, the radially inner side of the annular groove 13 has a speed measuring teeth body 12 which is axially extended, the speed measuring teeth body has an annular outer end surface with speed measuring teeth 121. A body of the friction disc 2 and a body of the speed measuring gear 1 on the radially outer side of the annular groove 13 abut each other and are fixed. As further shown in FIG. 1, the friction disc 2 has a limiting part 21 extending axially from the inner edge of its body, and the limiting part 21 is inserted into the annular groove 13 to establish the radial positioning of the limiting part 21 and the annular groove 13. That is to say, the outer diameter of the limiting part 21 and the inner diameter of the annular groove 13 need to maintain the radial positioning dimension relationship, and the assembly preset position may be formed before the limiting part 21 and the annular groove 13 are assembled and fixed, so as to ensure the assembly accuracy; apparently, the assembly presetting function is integrated into the speed measuring gear 1 body, which further improves the compactness of the whole structure. On the basis of not increasing the use space, the assembly accuracy is ensured.

Further, the middle part of the shaft end front cover 3 has a middle ring body 33 which is axially extended. The middle ring body 33 is inserted between the inner hole of the friction disc 2 and the outer peripheral surface of the speed measuring teeth body 12, and a third sealing pair is provided between the inner hole of the middle ring body 33 and the outer peripheral surface of the speed measuring teeth body 12. In addition, a sealing barrier is established on the mating surface and internal structure of the friction disc 2 and the brush, which may effectively prevent carbon powder formed by grounding friction from polluting other devices at the shaft end, avoid frequent maintenance and repair, and thus reduce the operation and maintenance cost.

As shown in the Figure, the outer peripheral surface of the speed measuring teeth body 12 is provided with a third sealing element mounting groove 15, and the third sealing element 6 is arranged in the third sealing element mounting groove15 to form a sealing pair between the inner hole of the middle ring body 33 and the outer peripheral surface of the speed measuring teeth body 12. It should be understood that the sealing pair is not limited to the implementation mode shown in the Figure, and other ways may be adopted to realize the above sealing relationship, for example, but not limited to, setting an oil sealing or sandwiching a sealing felt ring between the inner hole of the middle ring body 33 and the outer peripheral surface of the speed measuring teeth body 12.

In addition, the sealing pair may also be arranged between the outer peripheral surface of the middle ring body 33 and the inner hole of the friction disc 2, which may also establish a sealing barrier between the mating surface of the friction disc 2 and the brush and the internal structure to prevent carbon powder formed by friction from polluting other devices at the shaft end; of course, the third sealing pair may also be constructed at the outer peripheral surface and the inner hole of the middle ring body 33 at the same time. As long as the above functional requirements are met, it is within the scope of the present application.

Further, the middle ring body 33 may also be arranged such that when the shaft end front cover 3 is fixedly connected with the shaft end of the axle 20, the middle ring body 33 axially presses against the groove bottom of the annular groove 13 of the speed measuring gear 1. In this way, in addition to constructing reliable sealing, the middle ring body 33 may also serve as a pre-positioning structure for assembling the shaft end front cover 3. Apparently, the realization of this function also effectively utilizes the above-mentioned basic structure, that is, it does not occupy more space after the function is added, which conforms to the core design concept of this solution.

As shown in the Figure, the speed measuring gear 1 has a convex ring 14 axially extending from its body for pressing against the outer ring of the bearing 30 between the wheel 10 and the axle 20. Similarly, the arrangement of the convex ring 14 makes the speed measuring gear 1 have the function of providing axial limit of the bearing 30, that is to say, there is no need to provide a separate retaining ring for the outer ring of the bearing, and the overall structure is more compact and reasonable.

It should be noted that, based on the respective functional principle requirements of the speed measuring gear 1 and the friction disc 2, after they are made of different materials, they are first fixedly connected into an integrated composite component, and then assembled with the bogie shaft end, which is convenient for assembly, maintenance and other operations. Preferably, the friction disc 2 and the speed measuring gear 1 may be fixedly connected by multiple threaded fasteners evenly distributed in the circumferential direction.

During the running of the vehicle, the speed sensor 4 may be inserted and fixed in the speed sensor interface 31. With the rotation of the wheel 10, the speed measuring gear 1 fixed on it rotates synchronously. The signal processing end of the speed sensor 4 is inserted into the speed sensor interface 31, which sends out a signal to the speed measuring teeth 121 on the outer end face of the speed measuring gear 1 and generates electrical pulse signals in turn. The wheel speed may be calculated from the detected pulse number. It should be noted that the specific structural form and number of the speed measuring teeth 121 may be selected according to the action mechanism and accuracy requirements of the speed sensor 4, which may be realized by those skilled in the art based on the prior art and is not the core invention of the present application, so it is not described in detail here.

In addition, the brush (not shown in the Figure) of the grounding device 5 extends into the shaft end front cover 3 through the brush interface to adapt with the friction disc 2, so as to realize grounding conduction. Similarly, the grounding device 5 may also be realized based on the prior art, and is not described in detail here.

In addition to the aforementioned bogie shaft end structure, this embodiment further provides a bogie including the aforementioned shaft end structure. As shown in the Figure, the central part 34 of the shaft end front cover 3 penetrates through the central through hole 11 of the speed measuring gear 1, and is fixedly connected with the shaft end of the axle 20 by multiple threaded fasteners. Herein, other functional components of the bogie may be realized by the existing technology, so they are not described here.

In addition to the bogie and the shaft end structure thereof, the embodiment further provides a low-floor vehicle including the bogie. Herein, other functional components of the bogie may be realized by the existing technology, so they are not described here.

In addition, the bogie shaft end structure provided by this embodiment is not limited to low-floor vehicles, but may also be applied to any other rail vehicles that need the shaft end to realize grounding and speed measurement functions.

## Claims

1. A shaft end structure of a bogie, comprising:
a speed measuring gear (1) with a central through hole (11), which is configured to be fixedly connected with an end face of a wheel (10), and an outer end face of the speed measuring gear (1) is provided with a plurality of speed measuring teeth (121) evenly distributed in a circumferential direction;
a friction disc (2), which is fixedly connected with the speed measuring gear (1), wherein the friction disc (2) is arranged on an outer end surface, outside the speed measuring teeth (121) in a radial direction, of the speed measuring gear (1);
a shaft end front cover (3), which covers an outer side of the speed measuring gear (1) and the friction disc (2), wherein a central part (34) of a main body of the shaft end front cover (3) is used for passing through the central through hole (11) of the speed measuring gear (1) and fixedly connecting to a shaft end of an axle (20); and the shaft end front cover (3) is provided thereon with a speed sensor interface (31) and a brush interface that are arranged corresponding to the speed measuring teeth (121) and the friction disc (2) respectively,
**characterized in that** the speed measuring gear (1) has a concave annular groove (13), and a speed measuring teeth body (12) which is axially extended, is provided at a radial inner side of the annular groove (13), and the speed measuring teeth body (12) has an annular outer end surface provided with the speed measuring teeth (121); the friction disc (2) abuts against and is fixed with the speed measuring gear (1) on a radial outer side of the annular groove (13), and the friction disc (2) is provided with a limiting part (21) extending axially from an inner edge of a main body of the friction disc (2), and the limiting part (21) is inserted into the annular groove (13) to establish radial positioning of the limiting part (21) and the annular groove (13).

2. The shaft end structure according to claim 1, wherein a middle part of the shaft end front cover (3) has a middle ring body (33) which is axially extended, and the middle ring body (33) is inserted between an inner hole of the friction disc (2) and an outer peripheral surface of the speed measuring teeth body (12); and a third dynamic sealing pair is arranged between an outer peripheral surface of the middle ring body (33) and an inner hole of the friction disc (2) and/or between an inner hole of the middle ring body (33) and the outer peripheral surface of the speed measuring teeth body (12).

3. The shaft end structure according to claim 2, wherein a third sealing element mounting groove (15) is defined on the outer peripheral surface of the speed measuring teeth body (12), and a third sealing element (6) is arranged in the third sealing element mounting groove (15) to form the third dynamic sealing pair between the inner hole of the middle ring body (33) and the outer peripheral surface of the speed measuring teeth body (12).

4. The shaft end structure according to claim 3, wherein the middle ring body (33) is arranged such that when the shaft end front cover (3) is fixedly connected to the shaft end of the axle (20), the middle ring body (33) is axially pressed against a groove bottom of the annular groove (13).

5. The shaft end structure according to claim 4, wherein the speed measuring gear (1) has a convex ring (14) formed axially extending from a body of the speed measuring gear (1) for pressing against the bearing (30) outer ring between the wheel (10) and the axle (20).

6. The shaft end structure according to claim 1, wherein the friction disc (2) and the speed measuring gear (1) are fixedly connected by a plurality of threaded fasteners evenly distributed in a circumferential direction.

7. The shaft end structure according to claim 1, wherein the shaft end front cover (3) has an outer ring body (35) axially extending from the outer edge of the body of the shaft end front cover (3) to an outer edge of the wheel (10), a static sealing pair is able to be arranged between the end face of the wheel (10) and the speed measuring gear (1), and a first dynamic sealing pair is arranged between the outer peripheral surface of the speed measuring gear (1) and the outer ring body (35) of the shaft end front cover (3).

8. The shaft end structure according to claim 7, wherein a second dynamic sealing pair is arranged between the central part (34) of the shaft end front cover (3) and the central through hole (11) of the speed measuring gear (1).

9. The shaft end structure according to claim 8, wherein sealant is coated between the wheel (10) end face and the speed measuring gear (1) to form the static sealing pair.

10. The shaft end structure according to claim 9, wherein the outer peripheral surface of the speed measuring gear (1) or the outer ring body (35) of the shaft end front cover (3) is provided with a first sealing element mounting groove (16), and the first sealing element (7) is arranged in the first seal mounting groove to form the first dynamic sealing pair.

11. The shaft end structure according to claim 10, wherein the central part (34) of the shaft end front cover (3) or the through hole at the middle part of the speed measuring gear (1) is provided with a second sealing element mounting groove (17), and the second sealing element (8) is arranged in the second sealing element mounting groove (17) to form the second dynamic sealing pair.

12. The shaft end structure according to claim 11, wherein a third sealing element mounting groove (15) is arranged on the outer peripheral surface of the speed measuring teeth body (12), and a third sealing element (6) is arranged in the third sealing element mounting groove (15) to form a third dynamic sealing pair between the inner hole of the middle ring body (33) and the outer peripheral surface of the speed measuring teeth body (12).

13. The shaft end structure according to any one of claims 1 to 12, wherein a carbon powder accommodating cavity (36) is arranged between the friction disc (2) and the shaft end front cover (3), and a powder discharging hole (37) communicated with the carbon powder accommodating cavity (36) is arranged at the bottom of the shaft end front cover (3), and the powder discharging hole (37) is tightened by with a screw plug (9).

14. A bogie, comprising an axle (20) and a wheel (10) which are matched, wherein the bogie further comprises the bogie shaft end structure according to any one of claims 1 to 13; a speed sensor (4) and a grounding device (5) are fixedly arranged on the shaft end front cover (3), and an signal processing end of the speed sensor (4) is inserted into the speed sensor interface (31) to obtain a wheel (10) rotation speed; a brush of the grounding device (5) extends through an brush interface to fit with the friction disc (2), which realizes grounding and conduction.

15. The bogie according to claim 14, wherein the central part (34) of the body of the shaft end front cover (3) is inserted through the central through hole (11) of the speed measuring gear (1), and is fixedly connected with the shaft end of the axle (20) by a plurality of threaded fasteners.

16. A low-floor vehicle, comprising the bogie according to any one of claim 14 or claim 15.

## Patentansprüche

1. Wellenendstruktur eines Drehgestells, die Folgendes umfasst:
ein Drehzahlmesszahnrad (1) mit einer mittigen Durchgangsbohrung (11), das so eingerichtet ist, dass es mit einer Stirnfläche eines Rades (10) fest verbunden ist, und wobei eine äußere Stirnfläche des Drehzahlmesszahnrades (1) mit mehreren Drehzahlmesszähnen (121) versehen ist, die in einer Umfangsrichtung gleichmäßig verteilt sind,
eine Reibscheibe (2), die fest mit dem Drehzahlmesszahnrad (1) verbunden ist, wobei die Reibscheibe (2) an einer in einer Radialrichtung außerhalb der Drehzahlmesszähne (121) gelegenen äußeren Endfläche des Drehzahlmesszahnrades (1) angeordnet ist,
eine Wellenendfrontabdeckung (3), die eine Außenseite des Drehzahlmesszahnrades (1) und die Reibscheibe (2) abdeckt, wobei ein Mittelteil (34) eines Hauptkörpers der Wellenendfrontabdeckung (3) zum Durchführen durch die mittige Durchgangsbohrung (11) des Drehzahlmesszahnrades (1) und zur festen Verbindung mit einem Wellenende einer Achse (20) dient und die Wellenendfrontabdeckung (3) daran mit einer Drehzahlsensorschnittstelle (31) und einer Bürstenschnittstelle versehen ist, die den Drehzahlmesszähnen (121) bzw. der Reibscheibe (2) entsprechend angeordnet sind,
**dadurch gekennzeichnet, dass** das Drehzahlmesszahnrad (1) eine konkave Ringnut (13) aufweist und ein Drehzahlmesszähnekörper (12), der axial verlängert ist, an einer radialen Innenseite der Ringnut (13) vorgesehen ist und der Drehzahlmesszähnekörper (12) eine ringförmige äußere Endfläche aufweist, die mit den Drehzahlmesszähnen (121) versehen ist, die Reibscheibe (2) an einer radialen Außenseite der Ringnut (13) an dem Drehzahlmesszahnrad (1) anliegt und mit diesem befestigt ist und die Reibscheibe (2) mit einem Begrenzungsteil (21) versehen ist, das sich axial von einem Innenrand eines Hauptkörpers der Reibscheibe (2) aus erstreckt, und das Begrenzungsteil (21) zur Herstellung einer radialen Positionierung des Begrenzungsteils (21) und der Ringnut (13) in die Ringnut (13) eingesetzt ist.

2. Wellenendstruktur nach Anspruch 1, wobei ein mittlerer Teil der Wellenendfrontabdeckung (3) einen mittleren Ringkörper (33) aufweist, der axial verlängert ist, und der mittlere Ringkörper (33) zwischen einer Innenbohrung der Reibscheibe (2) und einer Außenumfangsfläche des Drehzahlmesszähnekörpers (12) eingesetzt ist und ein drittes Paar dynamischer Dichtungen zwischen einer Außenumfangsfläche des mittleren Ringkörpers (33) und einer Innenbohrung der Reibscheibe (2) und/oder zwischen einer Innenbohrung des mittleren Ringkörpers (33) und der Außenumfangsfläche des Drehzahlmesszähnekörpers (12) angeordnet ist.

3. Wellenendstruktur nach Anspruch 2, wobei eine dritte Dichtelementmontagenut (15) an der Außenumfangsfläche des Drehzahlmesszähnekörpers (12) gebildet ist und zur Bildung des dritten Paares dynamischer Dichtungen zwischen der Innenbohrung des mittleren Ringkörpers (33) und der Außenumfangsfläche des Drehzahlmesszähnekörpers (12) ein drittes Dichtelement (6) in der dritten Dichtelementmontagenut (15) angeordnet ist.

4. Wellenendstruktur nach Anspruch 3, wobei der mittlere Ringkörper (33) so angeordnet ist, dass dann, wenn die Wellenendfrontabdeckung (3) fest mit dem Wellenende der Achse (20) verbunden ist, der mittlere Ringkörper (33) axial gegen einen Nutgrund der Ringnut (13) gedrückt ist.

5. Wellenendstruktur nach Anspruch 4, wobei das Drehzahlmesszahnrad (1) einen konvexen Ring (14) aufweist, der sich axial von einem Körper des Drehzahlmesszahnrades (1) erstreckend gebildet ist, um gegen den Außenring des Lagers (30) zwischen dem Rad (10) und der Achse (20) zu drücken.

6. Wellenendstruktur nach Anspruch 1, wobei die Reibscheibe (2) und das Drehzahlmesszahnrad (1) über mehrere in einer Umfangsrichtung gleichmäßig verteilte, mit Gewinde versehene Befestigungselemente fest verbunden sind.

7. Wellenendstruktur nach Anspruch 1, wobei die Wellenendfrontabdeckung (3) einen äußeren Ringkörper (35) aufweist, der sich axial vom Außenrand des Körpers der Wellenendfrontabdeckung (3) zu einem Außenrand des Rades (10) erstreckt, ein Paar statischer Dichtungen zwischen der Stirnfläche des Rades (10) und dem Drehzahlmesszahnrad (1) angeordnet werden kann und ein erstes Paar dynamischer Dichtungen zwischen der Außenumfangsfläche des Drehzahlmesszahnrades (1) und dem äußeren Ringkörper (35) der Wellenendfrontabdeckung (3) angeordnet ist.

8. Wellenendstruktur nach Anspruch 7, wobei ein zweites Paar dynamischer Dichtungen zwischen dem Mittelteil (34) der Wellenendfrontabdeckung (3) und der mittigen Durchgangsbohrung (11) des Drehzahlmesszahnrades (1) angeordnet ist.

9. Wellenendstruktur nach Anspruch 8, wobei zwischen der Stirnfläche des Rades (10) und dem Drehzahlmesszahnrad (1) ein Dichtmittel aufgetragen ist, um das Paar statischer Dichtungen zu bilden.

10. Wellenendstruktur nach Anspruch 9, wobei die Außenumfangsfläche des Drehzahlmesszahnrades (1) oder der äußere Ringkörper (35) der Wellenendfrontabdeckung (3) mit einer ersten Dichtelementmontagenut (16) versehen ist und das erste Dichtelement (7) zur Bildung des ersten Paares dynamischer Dichtungen in der ersten Dichtungsmontagenut angeordnet ist.

11. Wellenendstruktur nach Anspruch 10, wobei der Mittelteil (34) der Wellenendfrontabdeckung (3) oder die Durchgangsbohrung am mittleren Teil des Drehzahlmesszahnrades (1) mit einer zweiten Dichtelementmontagenut (17) versehen ist und das zweite Dichtelement (8) zur Bildung des zweiten Paares dynamischer Dichtungen in der zweiten Dichtelementmontagenut (17) angeordnet ist.

12. Wellenendstruktur nach Anspruch 11, wobei eine dritte Dichtelementmontagenut (15) an der Außenumfangsfläche des Drehzahlmesszähnekörpers (12) angeordnet ist und zur Bildung eines dritten Paares dynamischer Dichtungen zwischen der Innenbohrung des mittleren Ringkörpers (33) und der Außenumfangsfläche des Drehzahlmesszähnekörpers (12) ein drittes Dichtelement (6) in der dritten Dichtelementmontagenut (15) angeordnet ist.

13. Wellenendstruktur nach einem der Ansprüche 1 bis 12, wobei zwischen der Reibscheibe (2) und der Wellenendfrontabdeckung (3) ein Kohlepulveraufnahmehohlraum (36) angeordnet ist und am Boden der Wellenendfrontabdeckung (3) eine mit dem Kohlepulveraufnahmehohlraum (36) in Verbindung stehende Pulverabgabeöffnung (37) angeordnet ist und die Pulverabgabeöffnung (37) mit einem Schraubstopfen (9) abgedichtet ist.

14. Drehgestell, das eine Achse (20) und ein Rad (10) umfasst, die aufeinander abgestimmt sind, wobei das Drehgestell ferner die Drehgestellwellenendstruktur nach einem der Ansprüche 1 bis 13 umfasst, ein Drehzahlsensor (4) und eine Erdungsvorrichtung (5) fest an der Wellenendfrontabdeckung (3) angeordnet sind und ein Signalverarbeitungsende des Drehzahlsensors (4) in die Drehzahlsensorschnittstelle (31) eingeführt ist, um eine Drehzahl des Rades (10) zu gewinnen, eine Bürste der Erdungsvorrichtung (5) sich so durch eine Bürstenschnittstelle erstreckt, dass sie mit der Reibscheibe (2) zusammenpasst, wodurch eine Erdung und Leitung erzielt wird.

15. Drehgestell nach Anspruch 14, wobei der Mittelteil (34) des Körpers der Wellenendfrontabdeckung (3) durch die mittige Durchgangsbohrung (11) des Drehzahlmesszahnrads (1) eingeführt und über mehrere mit Gewinde versehene Befestigungselemente fest mit dem Wellenende der Achse (20) verbunden ist.

16. Niederflurfahrzeug, das das Drehgestell nach Anspruch 14 oder Anspruch 15 umfasst.

## Revendications

1. Structure d'extrémité d'arbre d'un bogie, comprenant :
une roue dentée de mesure de vitesse (1) présentant un trou traversant central (11), laquelle est réalisée de manière à être raccordée de manière fixe à une face d'extrémité d'une roue (10), et une face d'extrémité extérieure de la roue dentée de mesure de vitesse (1) étant pourvue d'une pluralité de dents de mesure de vitesse (121) réparties uniformément dans un sens circonférentiel ;
un disque de friction (2) qui est raccordé de manière fixe à la roue dentée de mesure de vitesse (1), le disque de friction (2) étant agencé sur une surface d'extrémité extérieure, à l'extérieur des dents de mesure de vitesse (121) dans un sens radial, de la roue dentée de mesure de vitesse (1) ;
un recouvrement avant d'extrémité d'arbre (3) qui recouvre un côté extérieur de la roue dentée de mesure de vitesse (1) et le disque de friction (2), une partie centrale (34) d'un corps principal du recouvrement avant d'extrémité d'arbre (3) étant utilisée pour le passage à travers le trou traversant central (11) de la roue dentée de mesure de vitesse (1) et le raccordement de manière fixe à une extrémité d'arbre d'un essieu (20), et le recouvrement avant d'extrémité d'arbre (3) étant pourvu sur celui-ci d'une interface de capteur de vitesse (31) et d'une interface de balai qui sont agencées en correspondance avec les dents de mesure de vitesse (121) et le disque de friction (2), respectivement,
**caractérisé en ce que** la roue dentée de mesure de vitesse (1) présente une rainure annulaire concave (13) et un corps à dents de mesure de vitesse (12) qui est axialement allongé est prévu d'un côté intérieur radial de la rainure annulaire (13), et le corps à dents de mesure de vitesse (12) présente une surface d'extrémité extérieure annulaire pourvue des dents de mesure de vitesse (121), le disque de friction (2) est en butée contre la roue dentée de mesure de vitesse (1) et est fixé à celle-ci d'un côté extérieur radial de la rainure annulaire (13), et le disque de friction (2) est pourvu d'une pièce de limitation (21) qui s'étend axialement à partir d'un bord intérieur d'un corps principal du disque de friction (2), et la pièce de limitation (21) est insérée dans la rainure annulaire (13) pour établir un positionnement radial de la pièce de limitation (21) et de la rainure annulaire (13).

2. Structure d'extrémité d'arbre selon la revendication 1, une partie médiane du recouvrement avant d'extrémité d'arbre (3) présentant un corps circulaire médian (33) qui est axialement allongé, et le corps circulaire médian (33) étant inséré entre un trou intérieur du disque de friction (2) et une surface périphérique extérieure du corps à dents de mesure de vitesse (12), et une troisième paire de joints d'étanchéité dynamiques étant agencée entre une surface périphérique extérieure du corps circulaire médian (33) et un trou intérieur du disque de friction (2) et/ou entre un trou intérieur du corps circulaire médian (33) et la surface périphérique extérieure du corps à dents de mesure de vitesse (12).

3. Structure d'extrémité d'arbre selon la revendication 2, une troisième rainure de montage (15) d'élément d'étanchéité étant définie sur la surface périphérique extérieure du corps à dents de mesure de vitesse (12), et un troisième élément d'étanchéité (6) étant agencé dans la troisième rainure de montage (15) d'élément d'étanchéité pour former la troisième paire de joints d'étanchéité dynamiques entre le trou intérieur du corps circulaire médian (33) et la surface périphérique extérieure du corps à dents de mesure de vitesse (12).

4. Structure d'extrémité d'arbre selon la revendication 3, le corps circulaire médian (33) étant agencé de telle sorte que, lorsque le recouvrement avant d'extrémité d'arbre (3) est raccordé de manière fixe à l'extrémité d'arbre de l'essieu (20), le corps circulaire médian (33) est poussé axialement contre un fond de rainure de la rainure annulaire (13).

5. Structure d'extrémité d'arbre selon la revendication 4, la roue dentée de mesure de vitesse (1) présentant une bague convexe (14) réalisée de manière à s'étendre axialement à partir d'un corps de la roue dentée de mesure de vitesse (1) pour pousser contre la bague extérieure du palier (30) entre la roue (10) et l'essieu (20).

6. Structure d'extrémité d'arbre selon la revendication 1, le disque de friction (2) et la roue dentée de mesure de vitesse (1) étant raccordés de manière fixe par une pluralité d'éléments de fixation filetés répartis uniformément dans un sens circonférentiel.

7. Structure d'extrémité d'arbre selon la revendication 1, le recouvrement avant d'extrémité d'arbre (3) présentant un corps circulaire extérieur (35) s'étendant axialement du bord extérieur du corps du recouvrement avant d'extrémité d'arbre (3) à un bord extérieur de la roue (10), une paire de joints d'étanchéité statiques étant apte à être agencée entre la face d'extrémité de la roue (10) et la roue dentée de mesure de vitesse (1), et une première paire de joints d'étanchéité dynamiques étant agencée entre la surface périphérique extérieure de la roue dentée de mesure de vitesse (1) et le corps circulaire extérieur (35) du recouvrement avant d'extrémité d'arbre (3).

8. Structure d'extrémité d'arbre selon la revendication 7, une deuxième paire de joints d'étanchéité dynamiques étant agencée entre la partie centrale (34) du recouvrement avant d'extrémité d'arbre (3) et le trou traversant central (11) de la roue dentée de mesure de vitesse (1).

9. Structure d'extrémité d'arbre selon la revendication 8, un matériau d'étanchéité étant appliqué entre la face d'extrémité de la roue (10) et la roue dentée de mesure de vitesse (1) pour former la paire de joints d'étanchéité statiques.

10. Structure d'extrémité d'arbre selon la revendication 9, la surface périphérique extérieure de la roue dentée de mesure de vitesse (1) ou le corps circulaire extérieur (35) du recouvrement avant d'extrémité d'arbre (3) étant pourvu(e) d'une première rainure de montage (16) d'élément d'étanchéité, et le premier élément d'étanchéité (7) étant agencé dans la première rainure de montage d'étanchéité pour former la première paire de joints d'étanchéité dynamiques.

11. Structure d'extrémité d'arbre selon la revendication 10, la partie centrale (34) du recouvrement avant d'extrémité d'arbre (3) ou le trou traversant au niveau de la partie médiane de la roue dentée de mesure de vitesse (1) étant pourvu(e) d'une deuxième rainure de montage (17) d'élément d'étanchéité, et le deuxième élément d'étanchéité (8) étant agencé dans la deuxième rainure de montage (17) d'élément d'étanchéité pour former la deuxième paire de joints d'étanchéité dynamiques.

12. Structure d'extrémité d'arbre selon la revendication 11, une troisième rainure de montage (15) d'élément d'étanchéité étant agencée sur la surface périphérique extérieure du corps à dents de mesure de vitesse (12), et un troisième élément d'étanchéité (6) étant agencé dans la troisième rainure de montage (15) d'élément d'étanchéité pour former une troisième paire de joints d'étanchéité dynamiques entre le trou intérieur du corps circulaire central (33) et la surface périphérique extérieure du corps à dents de mesure de vitesse (12).

13. Structure d'extrémité d'arbre selon l'une des revendications 1 à 12, une cavité de logement de poudre de carbone (36) étant agencée entre le disque de friction (2) et le recouvrement avant d'extrémité d'arbre (3), et un trou d'évacuation de poudre (37) communiquant avec la cavité de logement de poudre de carbone (36) étant agencé au fond du recouvrement avant d'extrémité d'arbre (3), et le trou d'évacuation de poudre (37) étant étanchéifié par un bouchon fileté (9).

14. Bogie comprenant un essieu (20) et une roue (10) adaptés l'un à l'autre, le bogie comprenant en outre la structure d'extrémité d'arbre de bogie selon l'une des revendications 1 à 13, un capteur de vitesse (4) et un dispositif de mise à la terre (5) étant agencés de manière fixe sur le recouvrement avant d'extrémité d'arbre (3), et une extrémité de traitement de signaux du capteur de vitesse (4) étant insérée dans l'interface de capteur de vitesse (31) pour obtenir une vitesse de rotation de la roue (10), une balai du dispositif de mise à la terre (5) s'étendant à travers une interface de balai pour s'adapter au disque de friction (2), la mise à la terre et la conduction étant ainsi réalisées.

15. Bogie selon la revendication 14, la partie centrale (34) du corps du recouvrement avant d'extrémité d'arbre (3) étant insérée à travers le trou traversant central (11) de la roue dentée de mesure de vitesse (1) et étant raccordée de manière fixe à l'extrémité d'arbre de l'essieu (20) par une pluralité d'éléments de fixation filetés.

16. Véhicule à plancher surbaissé, comprenant le bogie selon la revendication 14 ou la revendication 15.
